(19) Europäisches Patentamt
European Patent Office
Office européen des brevets

(11) Veröffentlichungsnummer: **0 288 825 A2**

(12) **EUROPÄISCHE PATENTANMELDUNG**

(21) Anmeldenummer: **88105932.3**

(22) Anmeldetag: **14.04.88**

(51) Int. Cl.⁴: **C08G 83/00 , C08G 18/40 , //C08G65/32,C08G18/50**

(30) Priorität: **25.04.87 DE 3713858**

(43) Veröffentlichungstag der Anmeldung: **02.11.88 Patentblatt 88/44**

(84) Benannte Vertragsstaaten: **AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Sanders, Josef, Dr.**
**Wolfskaul 6**
**D-5000 Köln 80(DE)**
Erfinder: **Grögler, Gerhard, Dr.**
**von-Diergardt-Strasse 48**
**D-5090 Leverkusen(DE)**
Erfinder: **Dieterich, Dieter, Dr.**
**Henry-Theodor-von-Böttinger Strasse 16**
**D-5090 Leverkusen 1(DE)**

(54) **Aromatische Polyamine, ein Verfahren zu ihrer Herstellung und ihre Verwendung zur Herstellung von Polyurethankunststoffen.**

(57) Die vorliegende Erfindung betrifft endständige Aminophenoxygruppen aufweisende Verbindungen der allgemeinen Formel

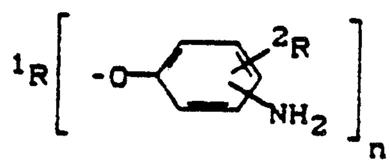

in welcher

$^1R$ für einen n-wertigen Rest steht, wie er durch Entfernung der Hydroxylgruppen von einer n-wertigen Polyhydroxylverbindung des Molgewichts 400 - 12.000 steht,

$^2R$ für Wasserstoff oder eine Methylgruppe steht und

n eine ganze Zahl von 2 bis 8 bedeutet.

Die vorliegende Erfindung betrifft ferner ein Verfahren zu ihrer Herstellung und ihre Verwendung zur Herstellung von Polyurethankunststoffen.

EP 0 288 825 A2

# Aromatische Polyamine, ein Verfahren zu ihrer Herstellung und ihre Verwendung zur Herstellung von Polyurethankunststoffen

Die Erfindung betrifft neue endständige Aminophenoxygruppen aufweisende Verbindungen, ein Verfahren zu ihrer Herstellung und ihre Verwendung als Aufbaukomponente bei der Herstellung von gegebenenfalls zellförmigen Polyurethan-Kunststoffen und Schaumstoffen.

Endständige, aromatische Aminogruppen aufweisende Polyaddukte sind im Prinzip bekannt.

US-PS 28 88 439 und DE-OS 17 20 646 beschreiben die Herstellung von Aminopolyethern durch Reaktion von Nitroarylisocyanaten mit Polyolen und nachfolgender Hydrierung. Die analoge Umsetzung von Azoarylisocyanaten mit Polyolen liefert nach Reduktion ebenfalls aromatische Aminopolyether (DE-OS 12 57 427). In den DE-OS 11 22 254 und DE-OS 16 94 152 wird ein Verfahren beschrieben, bei dem NCO-Prepolymere mit Diaminen umgesetzt werden, welche unterschiedlich reaktive Aminogruppen aufweisen.

Auch die Reaktion von NCO-Prepolymeren mit Sulfaminsäure gemäß DE-AS 11 55 907, mit Ameisensäure gemäß FR-PS 14 15 317 oder mit Hydroxylgruppen aufweisenden Enaminen, Aldiminen oder Ketiminen gemäß DE-OS 21 16 882 sowie DE-OS 25 46 536 führt nach Hydrolyse bzw. Verseifung ebenso zu aromatischen Aminopolyethern, wie die thermische Spaltung von Urethanen aus NCO-Prepolymeren und sekundären oder tertiären Carbinolen gemäß DE-AS 12 70 046. Ferner beschreiben die DE-OS 29 48 419, 32 23 397, 32 23 398 sowie 32 23 400 verschiedene ein-bzw. zweistufige Verfahren zur Herstellung aromatischer Polyamine durch Hydrolyse von NCO-Prepolymeren in Gegenwart verschiedener Lösungsmittel-und Katalysatorsysteme.

Alle bisher beschriebenen Verfahren verlaufen über Isocyanatzwischenstufen und liefern daher in allen Fällen Produkte, die neben Ether-und aromatischen Aminogruppen zusätzliche Urethan-bzw. Harnstoffgruppen aufweisen. Dadurch bedingt zeigen diese Produkte eine für viele Zwecke unerwünscht hohe Viskosität. Ein weiterer Nachteil dieser zusätzlichen Urethan-bzw. Harnstoffbindungen ist ihre relativ geringe thermische Stabilität, wodurch der Wärmestand entsprechender mit diesen Aminopolyethern hergestellten Polyurethankunststoffe insbesondere von Elastomeren ungünstig beeinflußt wird.

Als weitere Synthesemöglichkeit für aromatische Polyamine kommt die unter Ringöffnung verlaufende Reaktion von Isatosäureanhydrid mit Polyolen in Betracht. Solche Amine sind beispielsweise in den DE-OS 20 19 432, 26 19 840, 26 48 774, 26 48 825 sowie in US-PS 41 80 644 beschrieben. Aromatische Aminopolyether erhält man ferner durch Umsetzung von Polyoxyalkylenpolyolen mit p-Aminobenzoesäurederivaten gemäß den japanischen Patentanmeldungen 59 053 533, 59 089 322 und 59 199 715. Nachteilig für viele Zwecke ist jedoch die geringe Reaktivität der auf diesem Wege erhaltenen aromatischen Esteramine.

Es war daher die der Erfindung zugrunde liegende Aufgabe, neue aromatische Polyamine zur Verfügung zu stellen, welche nicht mit den genannten Nachteilen behaftet sind und welche insbesondere niedrigere Viskositäten und gegebenenfalls günstige Reaktivitäten Isocyanaten gegenüber aufweisen.

Diese Aufgabe konnte durch Bereitstellung der neuen endständige Aminophenoxygruppen aufweisenden Verbindungen sowie des nachstehend näher beschriebenen Verfahrens zu ihrer Herstellung gelöst werden.

Gegenstand der vorliegenden Erfindung sind somit neue endständige Aminophenoxygruppen aufweisende Verbindungen der allgemeinen Formel

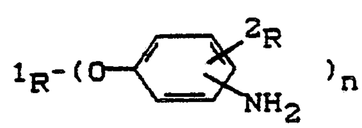

in welcher

$^1R$ für einen n-wertigen Rest steht, wie er durch Entfernung der Hydroxylgruppen von einer n-wertigen Polyhydroxylverbindung des Molgewichts 400 - 12.000, vorzugsweise 400 - 6.000 steht,

$^2R$ für eine Methylgruppe oder vorzugsweise für Wasserstoff steht und

n eine ganze Zahl von 2 bis 8, vorzugsweise 2 bis 4 bedeutet.

Gegenstand der vorliegenden Erfindung ist auch ein Verfahren zur Herstellung von endständige Aminophenoxygruppen aufweisenden Verbindungen der allgemeinen Formel

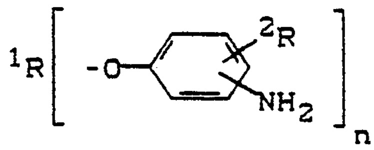

in der $^1R$, $^2R$ und n die vorgenannte Bedeutung haben, durch

a) Umsetzung von

(i) n-wertigen höhermolekularen Polyhydroxylverbindungen der allgemeinen Formel

$^1R(OH)_n$

mit

(ii) Verbindungen der allgemeinen Formel

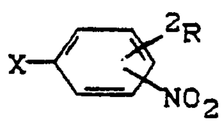

in der

$^2R$ die vorgenannte Bedeutung hat und

X für Fluor oder vorzugsweise Chlor steht und in der das Halogenatom und die Nitrogruppe vorzugsweise ortho-oder paraständig zueinander angeordnet sind,

in Gegenwart von alkalisch reagierenden Verbindungen zu den entsprechenden Nitrophenoxyaddukten der allgemeinen Formel

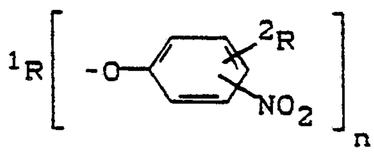

in der $^1R$, $^2R$ und n die vorgenannte Bedeutung haben und

b) an sich gekannte Hydrierung der zuletzt genannten Nitrophenoxyaddukte zu den entsprechenden Aminophenoxyaddukten.

Gegenstand der Erfindung ist schließlich auch die Verwendung der letztgenannten erfindungsgemäßen Aminophen oxygruppen aufweisenden Verbindungen als Aufbaukomponente bei der Herstellung von Polyurethankunststoffen nach dem Isocyanat-Polyadditionsverfahren.

Ausgangsmaterialien für das erfindungsgemäße Verfahren sind (i) höhermolekulare Polyhydroxylverbindungen und (ii) gegebenenfalls methylsubstituierte Nitrohalogenbenzole.

Geeignete Polyhydroxylverbindungen (i) sind vorzugsweise höhermolekulare Verbindung mit einem mittleren Molgewicht von 400 - 12.000, insbesondere von 400 - 6.000, welche mindestens 1 bis 9, vorzugsweise 2 bis 4 reaktive Hydroxylgruppen pro Mol aufweisen.

In Frage kommen beispielsweise die in der Polyurethanchemie üblichen, hydroxylgruppentragenden Polyacetale, Polythioether, Polycarbonate, Polyamide, Polysiloxane und/oder Polybutadiene, Polyester, Polylactone sowie Polyether; insbesondere aber Hydroxylgruppen tragende Polyether.

Die erfindungsgemäß in Frage kommenden Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoff atomen wie Wasser, Alkohole oder Amine, z. B. Ethylenglykol, Propylenglykol-(1,3) oder -(1,2), Trimethylolpropan, 4,4'-Dihydroxy-diphenylpropan, Anilin, Ammoniak, Ethanolamin oder Ethylendiamin hergestellt. Auch Sucrosepolyether, wie sie z. B. in den deutschen Auslegeschriften 1 176 358 und 1 064 938 beschrieben werden, kommen erfindungsgemäß in Frage, Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z. B. durch Polymerisation von Styrol und Acrylnitril in Gegenwart von Polyethern entstehen (amerikanische Patentschriften 3 383 351, 3 304 272, 3 523 093, 3 110 695, deutsche Patentschrift 1 152 536), sind geeignet, ebenso OH-Gruppen aufweisende Polybutadiene.

Als Polyacetale kommen z. B. die aus Glykolen, wie Di-oder Trio-ethylenglykol, 4,4′-Dioxethoxy-diphenyl-dimethyl-methan, Hexandiol und Formaldehyd oder durch Polymerisation cyclischer Acetale, wie z. B. Trioxan, herstellbare Verbindungen in Frage.

Als Hydroxylgruppen aufweisende Polycarbonate kommen solche der an sich bekannten Art in Betracht, die z. B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z.B. Diphenylcarbonat, oder Phosgen hergestellt werden können (DE-B 1 694 080, 1 915 908 und 2 221 751; DE-A 2 605 024).

Als Polyester aus Dicarbonsäuren und Diolen kommen solche aus Adipinsäure-und Isophthalsäure und geradkettigen und/oder verzweigten Diolen in Betracht, ebenso Lactonpolyester, vorzugsweise auf Basis von Caprolactan und Starterdiolen.

Unter den Polythioethern seien insbesondere die Kondensationsprodukte von Thiodiglykol mit sich selbst und/oder mit anderen Glykolen angeführt.

Auch bereits Urethan-oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, z. B. gemäß DE-A 2 559 372, in die Polyhydroxyverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o. G., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-PS 3 383 351, 3 304 273, 3 523 093, 3 110 695, DE-B 1 152 536) oder Polycarbonatpolyolen (DE-PS 1 769 795, US-PS 3 637 909) erhalten werden, sind für das erfindungsgemäße Verfahren geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Beim Einsatz von modifizierten Polyhydroxylverbindungen der oben genannten Art als Ausgangsmeterialien für die Polyamine entstehen Ausgangskomponenten, die im Polyisocyanat-Polyadditionsverfahren in vielen Fällen Polyurethankunststoffe mit wesentlich verbesserten mechanischen Eigenschaften ergeben.

Geeignete, wenn auch weniger bevorzugte Polyhydroxylkomponenten (i) sind auch organofunktionelle Polysil oxane, die zwei endständige, gegenüber Isocyanatgruppen reaktionsfähige Gruppen und Struktureinheiten der Formel -O-Si(R)$_2$-aufweisen, wobei in dieser Formel R für einen $C_1$-$C_4$-Alkyl-oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren.

Die erfindungsgemäß besonders bevorzugten Organopolysiloxane entsprechen der allgemeinen Formel

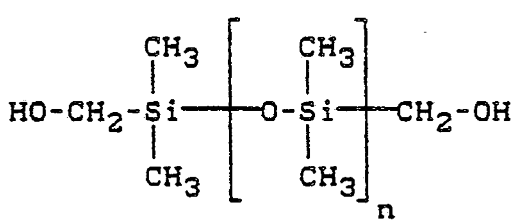

n = 5 bis 29

Sie werden in an sich bekannter Weise durch Äquilibrierung von 1,1,3,3-Tetramethyl-1,3-hydroxyme-

thyldisiloxan der Formel

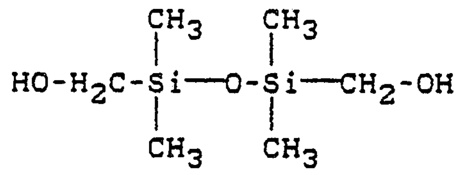

mit Octamethylcyclotetrasiloxan in Gegenwart von Schwefelsäure bzw. nach dem Verfahren der DE-B 1 236 505 hergestellt.

Zu den erfindungsgemäß in Betracht kommenden Ausgangsmaterialien (ii) gehören gegebenenfalls methylsubstituierte Halogennitrobenzole der allgemeinen Formel

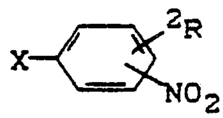

für welche

$^2R$ für Wasserstoff oder eine Methylgruppe, vorzugsweise für Wasserstoff steht,

X für Fluor oder vorzugsweise Chlor steht,

und in welcher die Halogen-und Nitrosubstituenten vorzugsweise ortho-oder paraständig zueinander angeordnet sind. In Betracht kommen beispielsweise 2-Nitrochlorbenzol, 2-Nitrofluorbenzol, 4-Nitrochlorbenzol, 4-Nitrofluorbenzol, 1-Methyl-2-nitro-3-chlorbenzol, 1-Methyl-2-nitro-3-fluorbenzol, 1-Methyl-4-nitro-5-chlorbenzol, 1-Methyl-4-nitro-5-fluorbenzol, 1-Methyl-2-nitro-6-chlorbenzol oder 1-Methyl-2-nitro-6-fluorbenzol. Besonders bevorzugte Ausgangsmaterialien (ii) sind 2-Nitrochlorbenzol oder 4-Nitrochlorbenzol.

Als alkalisch reagierende Verbindung, die zur Umsetzung der Polyhydroxylverbindungen (i) mit den Halogennitrobenzolen (ii) erforderlich sind, kommen beispielsweise Metallhydride, Metallalkoxide und bevorzugt Metallhydroxide in Frage. Besonders bevorzugt werden Natriumhydroxid und Kaliumhydroxid.

Bei der Durchführung der Stufe a) des erfindungsgemäßen Verfahrens können die Ausgangsmaterialien (ii) bezogen auf die Komponente (i) sowohl in stöchiometrischer Menge als auch im Über-oder Unterschuß zum Einsatz gelangen. Vorzugsweise wird die Komponente (ii) so bemessen, daß auf jedes Mol an Hydroxylgruppen der Komponente (i) 1 bis 1,5 Mol der Komponente (ii) vorliegt. Der bei der Reaktion frei werdende Halogenwasserstoff kann, wie schon erwähnt, durch Zusatz von Metallhydriden, Metallalkoxiden und Metallhydroxiden gebunden werden. Dabei wird ihre Menge zumindest so bemessen, daß sie zur Neutralisation des abgespaltenen Chlorwasserstoffs ausreicht. Besonders bevorzugt werden sie in einer Menge verwendet, daß 1 bis 3 Mol Basenäquivalente pro Mol Hydroxylgruppen zur Verfügung stehen.

Die Stufe a) des erfindungsgemäßen Verfahrens wird in Substanz oder zweckmäßig in einem organischen Lösungsmittel, gegebenenfalls in Gegenwart eines Phasentransferkatalysators durchgeführt. Dabei können die Reaktionspartner in homogener Phase oder zweiphasig, gelöst, emulgiert oder suspendiert vorliegen.

Geeignete organische Lösungsmittel sind beispielsweise: Benzol, Toluol, Xylol, Chlorbenzol, Dichlorbenzol, Trichlorbenzol, Diethylether, Diisopropylether, tert.-Butylmethylether, Tetrahydrofuran, Dioxan, Ethylenglykoldimethylether, Essigester, Aceton, Methylethylketon, Acetonitril, Furfurol, Methylenchlorid, Chloroform, Trichlorethylen, Tetrachlorethylen, Nitromethan, Nitropropan. Bevorzugt werden polare aprotische Lösungsmittel wie zum Beispiel Dimethylformamid, Dimethylacetamid, N-Methylpyrrolidon, Tetramethylharnstoff, N-Methylcaprolactam, Dimethylsulfoxid, Tetramethylensulfon, Hexamethylenphosphorsäuretriamid usw. Ganz besonders bevorzugt werden Dimethylformamid, Dimethylsulfoxid und N-Methylpyrrolidon.

Selbstverständlich können auch beliebige Gemische derartiger Lösungsmittel eingesetzt werden.

Die Menge des Lösungsmittels wird hierbei im allgemeinen so besessen, daß sie ausreicht, um die Ausgangsmaterialien (i) und (ii) klar zu lösen. In der Praxis bedeutet dies, daß die Lösungsmittel im allgemeinen in einer Menge von 50 bis 1.000, bevorzugt 100 bis 500 Gew.-Teilen Lösungsmittel pro 100 Gew.-Teilen des Gemisches aus den Komponenten (i) und (ii) zum Einsatz gelangen.

Es kann in manchen Fällen vorteilhaft sein, die Umsetzung in Gegenwart einer Phasentransferkatalysators durchzuführen. Solche Katalysatoren werden z. B. in E. V. und S. S. Dehmlow, Phase Transfer Catalysis, 2. Auflage, Verlag Chemie 1983, beschrieben. Geeignete Katalysatoren sind quaternäre

Ammonium-oder Phosphoniumsalze der Formel

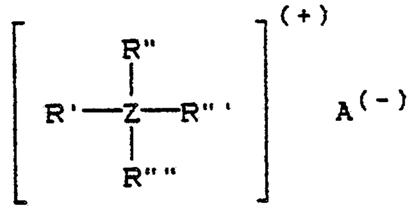

in welcher

Z für Stickstoff oder Phosphor steht,

$R'$, $R''$, $R'''$ und $R''''$ für gleiche oder verschiedene Reste stehen und Alkylgruppen mit 1 bis 18 Kohlenstoffatomen bedeuten, wobei einer der Reste auch für einen araliphatischen Rest mit 7 bis 15 Kohlenstoffatomen stehen kann, und wobei die Summe der Kohlenstoffatome der vier Reste vorzugsweise bei 12 bis 31 liegt.

Typische Beispiele geeigneter Katalysatoren sind N-Benzyl-N,N,N-triethyl-ammoniumchlorid oder -bromid, N-Benzyl-N-dodecyl-N,N-dimethyl-ammoniumchlorid oder -bromid, N,N,N,N-Tetra-n-hexyl-ammoniumchlorid oder -bromid, N-Benzyl-N,N,N-tri-n-octyl-ammoniumchlorid oder -bromid oder die diesen Ammoniumsalzen entsprechenden Phosphoniumsalze.

Die beispielhaft genannten quaternären Ammonium-oder Phosphoniumsalze werden bei der Durchführung des erfindungsgemäßen Verfahrens vorzugsweise in Substanz oder in Form ihrer wäßrigen Lösungen (beispielsweise mit einem Feststoffgehalt von 30 bis 60 Gew.-%) und vorzugsweise in einer Menge von 1 bis 10 Mol-%, bezogen auf die Molzahl der vorhandenen Hydroxylgruppen eingesetzt.

Bei Verwendung der erfindungsgemäß bevorzugten polaren aprotischen Lösungsmittel wie z. B. Dimethylformamid, N-Methylpyrrolidon oder Dimethylsulfoxid kann ohne Nachteile auf den Zusatz von Phasentransferkatalysatoren verzichtet werden.

Die Stufe a) des erfindungsgemäßen Verfahrens wird im allgemeinen bei 10 bis 100°C, bevorzugt bei 20 bis 60°C mit Überdruck, Unterdruck oder zweckmäßig drucklos, kontinuierlich oder diskontinuierlich durchgeführt.

Die Verweilzeit beträgt im allgemeinen 0,5 bis 24 Stunden; bevorzugt werden 0,5 bis 8 Stunden.

Zur Durchführung der Stufe a) des erfindungsgemäßen Verfahrens kann man beispielsweise so vorgehen, daß man die Ausgangsmaterialien und gegebenenfalls den Phasentransferkatalysator im gewählten Lösungsmittel vorlegt und die Base in gelöster oder suspendierter Form, bevorzugt in fester, möglichst fein gemahlener Form, unter Rühren, gegebenenfalls unter Kühlung portionsweise oder kontinuierlich zugibt. Anschließend rührt man bei Raumtemperatur oder gegebenenfalls erhöhter Temperatur so lange nach, bis IR-spektroskopisch ein vollständiger Umsatz der anfangs vorhandenen Hydroxylgruppen angezeigt wird und/oder dünnschicht-oder gaschromatographisch kein Ausgangsstoff (ii) mehr nachgewiesen werden kann.

Die Aufarbeitung der Nitrophenoxyaddukte erfolgt in an sich bekannter Weise. Zweckmäßig verdünnt man das Reaktionsgemisch mit einem mit Wasser nicht mischbaren inerten Lösungsmittel, wäscht mit Wasser oder Salzlösung neutral, destilliert die Lösungsmittel gegebenenfalls im Vakuum ab und trocknet im Vakuum. Die Neutralisation des Reaktionsgemisches kann auch durch Behandeln mit $CO_2$ erfolgen. Als inerte Lösungsmittel kommen beispielsweise Toluol, Methylenchlorid, Chlorbenzol, Dichlorbenzol, 1,2-Dichlorethan, Trichlorethylen u. a. in Betracht. Das so erhaltene Rohprodukt kann im allgemeinen ohne weitere Reinigung weiterverarbeitet werden. Sollte es jedoch infolge unvollständigen Umsatzes noch geringe Mengen an Ausgangsstoff (ii) enthalten, kann dieser durch Sublimation im Hochvakuum oder zweckmäßig durch Dünnschichtdestillation entfernt werden.

Grundsätzlich denkbar, jedoch weniger bevorzugt, wäre auch eine Arbeitsweise, die darin besteht, das in der Stufe a) anfallende Reaktionsgemisch, gegebenenfalls nach Neutralisation des überschüssigen Alkalihydroxids ohne Zwischenisolierung direkt der Stufe b) zuzuführen.

Die in der Stufe a) des erfindungsgemäßen Verfahrens erhaltenen endständige Nitrophenoxygruppen aufweisenden Verbindungen werden in der Stufe b) in an sich bekannter Weise durch Reduktion mit nascierendem oder katalytischem, beispielsweise mittels Raney-Nickel oder Palladium auf Kohle angeregtem Wasserstoff in die entsprechenden Polyamine überführt. Die Hydrierung kann in Gegenwart oder Abwesenheit von inerten Lösungmitteln bei 20 - 120° C und einem Druck von 20 bis 80 bar erfolgen. Geeignete Lösungsmittel sind beispielsweise Methanol, Ethanol, i-Propanol, Toluol, DMF u. a. Bevozugt wird Methanol. Die Diamine werden als Destillationsrückstand bei der destillativen Entfernung des Lösungsmittels gewonnen und können ohne weitere Reinigungsschritte zur Herstellung von Polyurethankunststoffen

verwendet werden.

Die nach Aufarbeitung erhaltenen erfindungsgemäßen Polyamine stellen im allgemeinen bräunlich gefärbte Produkte dar und zeichnen sich gegenüber den bisher bekannten aromatischen Aminopolyethern durch ihre wesentlich niedrigere Viskosität aus. Sie enthalten neben den bereits in den zugrunde liegenden Polyhydroxylverbindungen vorhandenen funktionellen Gruppen wie z. B. Ether-und/oder Thioether-und/oder Dialkylsiloxan und/oder Carbonatgruppen und/oder Reste von Polybutadienen nur noch eine ihrer Funktionalität entsprechende Anzahl von Ethergruppen. Die erfindungsgemäßen aromatischen Polyamine eignen sich als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen, wobei sie gegebenenfalls auch mit anderen niedermolekularen (Molekulargewicht 32 bis 399) und/oder höhermolekularen (Molekulargewicht 400 bis ca. 12.000 Verbindungen mit gegenüber Isocyanaten reaktiven Gruppen kombiniert werden können. Geeignete Ausgangskomponenten für die Herstellung von Polyurethankunststoffen werden beispielsweise in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs-und Zusatzstoffe.

Besonders geeignet sind die erfindungsgemäßen Polyamine für eine Anwendung in Kombination mit festen Polyisocyanaten. Gemäß DE-A 3 230 757 können mit diesen Komponenten bei RT oder gegebenenfalls erhöhter Temperatur beliebig lang lagerfähige Reaktionssysteme hergestellt werden, die erst bei stärkerer Hitzeeinwirkung aushärten. Derartige Systeme werden allgemein als Einkomponentensysteme bezeichnet. Geeignete feste Polyisocyanate sind beispielsweise dimeres 2,4-Diisocyanatotoluol (TT) oder 3,3′-Dimethyl-4,4′-diisocyanato-diphenylharnstoff (TDIH).

Die Herstellung von Polyurethan(harnstoff)en mittels der erfindungsgemäß hergestellten Polyamine ist ebenfalls Gegenstand der vorliegenden Erfindung. Ihre Anwendung kann z. B. für Elastomere, Beschichtungen, Fäden in der Applikation aus Schmelzen, Lösungen, Dispersionen oder als Reaktivkomponentenmischung erfolgen. Weitere Verwendungszwecke der erfindungsgemäß hergestellten Polyamine sind z. B. Kupplungskomponenten für Diazofarbstoffe, Härter für Epoxid und Phenolharze, sowie alle anderen an sich bekannten Reaktionen von Aminen wie Amid-oder Imidbildung und andere.

Die folgenden Beispiele sollen die Herstellung der erfindungsgemäßen Verbindungen erläutern. Wo nicht anders vermerkt, sind Mengenangaben als Gewichtsteile bze. Gewichtsprozente zu verstehen.

Beispiel 1

a) Nitrophenylierung

Zu einer Lösung von 750 g (0,75 mol) eines entwässerten Polypropylenoxidetherdiols der OH-Zahl 112 und 307 g (1,95 mol) 4-Chlornitrobenzol in 1.000 ml Dimethylsulfoxid (DMSO) gibt man unter Rühren protionsweise über 2 Stunden insgesamt 120 g (3 mol) gepulvertes Natriumhydroxid zu und rührt anschließend noch 3 Stunden bei Raumtemperatur sowie weitere 4 Stunden bei 50°C. Anschließend verdünnt man die Reaktionsmischung mit 1.500 ml Toluol und 50 ml Wasser, leitet unter Rühren 1 Stunde lang $CO_2$ ein und trocknet über $CaCl_2$. Nach Abziehen des Lösungsmittels wird das Rohprodukt bei 140°C 0,13 mbar gedünnschichtet.

Ausbeute: 878 g (94 % d. Theorie)
Viskosität: 640 mPa.s/25°C (braunes Öl)
OH-Zahl: 1

b) Hydrierung

3.000 g (2,42 mol) Nitrophenoxyaddukt gemäß Beispiel 1a werden in 11 l Methanol in Gegenwart von 450 g Raney-Nickel bei 60°C und 50 bar hydriert. Nach beendeter Wasserstoffaufnahme wird vom

Katalysator abfiltriert und das Lösungsmittel im Vakuum abgezogen.
Ausbeute: 2.741 g (96 % d. Th.)
Viskosität: 1.090 mPa.s/25° (dunkles Öl)
Aminzahl: 102

Beispiel 2

a) Nitrophenylierung

1.000 g (0,5 mol) Polypropylenoxidetherdiol der OH-Zahl 56, 205 g (1,3 mol) 4-Chlornitrobenzol und 80 g (2 mol) gepulvertes Natriumhydroxid werden analog Beispiel 1 a in 1.000 ml DMSO umgesetzt.
Ausbeute: 989 g (88 % d. Th.)
Viskosität: 720 mPa.s/25°C (braunes Öl)
OH-Zahl: 2

b) Hydrierung

Analog Beispiel 1 b werden 3.000 g (1,34 mol) Nitrophenoxyaddukt gemäß Beispiel 2 a in 11 l Methanol in Gegenwart von 450 g Raney-Nickel hydriert.
Ausbeute: 2.748 g (94 % d. Th.)
Viskosität: 1.020 mPa.s/25°C (dunkles Öl)
Aminzahl: 56

Beispiel 3

a) Nitrophenylierung

750 g (0,25 mol) Polypropylenoxidethertriol der OH-Zahl 56, 153,6 (0,98 mol) 4-Chlornitrobenzol und 60 g (1,5 mol) gepulvertes Natriumhydroxid werden analog Beispiel 1 a in 1.000 ml N-Methylpyrrolidon umgesetzt.
Ausbeute: 720 g (86 % d. Th.)
Viskosität: 1.100 mPa.s/25°C (dunkles Öl)
OH-Zahl: 6

b) Hydrierung

Analog Beispiel 1 b werden 530 g (0,16 mol) Nitrophenoxyaddukt gemäß Beispiel 3 a in 1.500 ml Methanol in Gegenwart von 80 g Raney-Nickel hydriert:
Ausbeute: 469 g (91 % d. Th.)
Viskosität: 1450 mPa's/25°C (dunkles Öl)
Aminzahl: 46

Beispiel 4

a) Nitrophenylierung

700 g (0,5 mol) Polyethylenoxidetherdiol der OH-Zahl 80, 205 g (1,3 mol) 4-Chlornitrobenzol und 80 g (2 mol) gepulvertes Natriumhydroxid werden analog Beispiel 1 a in 1.000 ml DMSO ungesetzt.
Ausbeute: 705 g (86 % d. Th.)
Viskosität: 270 mPa.s/50°C (gelbliches Wachs bei 25°C)
OH-ZaHL: < 1

b) Hydrierung

Analog Beispiel 1 b werden 500 g (0,3 mol) Nitrophenoxyaddukt gemäß Beispiel 4 a in 1.600 ml Methanol in Gegenwart von 75 g Raney-Nickel hydriert.
Ausbeute: 429 g (89 % d. Th.)
Viskosität: 640 mPa.s/50°C (bräunliches Wachs bei 25°C)
Aminzahl: 68

Beispiel 5

a) Nitrophenylierung

750 g (0,75 mol) Polytetrahydrofuranetherdiol der OH-Zahl 112, 307 g (1,95 mol) 4-Chlornitrobenzol und 120 g (3 mol) gepulvertes Natriumhydroxid werden analog Beispiel 1 a in 1.000 ml DMSO umgesetzt.
Ausbeute: 813 g (87 % d. Th.)
Viskosität: 1.350 mPa.s/25°C
OH-Zahl: 4

b) Hydrierung

Analog Beispiel 1 b werden 670 g (0,54 mol) Nitrophen oxyaddukt gemäß Beispiel 5 a in 1.400 ml Methanol in Gegenwart von 100 g Raney-Nickel hydriert.
Ausbeute: 586 g (91 % d. Th.)
Viskosität: 1.650 mPa.s/25°C (dunkles Öl)
Aminzahl: 98

Anwendungsbeispiele

Beispiel I

200 g des in Beispiel 2 b beschriebenen Aminopolyethers der Aminzahl 56 werden 15 Minuten bei Raumtemperatur im Wasserstrahlvakuum entgast und mit 42,1 g feingemahlenem dimeren 2,4-Diisocyanatotoluol (TT) der mittleren Korngröße 10 - 30 μ versetzt. Anschließend wird durch kurzzeitiges intensives Rühren (ca. 1 Minute) eine möglichst feinteilige Suspension hergestellt und innerhalb von 2 bis 3 Minuten in eine mit Trennmittel behandelte, auf 100°C vorgeheizte Form gegossen. Nach ca. 30 bis 60 Minuten bei 120 - 130°C wird der inzwischen verfestigte Prüfkörper entformt und weitere 3 bis 4 Stunden bei dieser Temperatur getempert. Die mechanischen Eigenschaften des so erhaltenen hochelastischen Polyurethanelastomers sind in Tabelle 1 angegeben.

Beispiel II

Analog Beispiel I wird zunächst ein Reaktionsgemisch hergestellt, das in dieser Form innerhalb von 2 bis 3 Minuten verarbeitet werden muß. Durch Zugabe von 0,2 - 0,4 g 3,3'-Dimethyl-4,4'-diamino-dicyclohexylmethan (Laromin C) kann jedoch gemäß DOS 3 230 757 die Gieß-bzw. Topfzeit des beschriebenen Reaktionsystems erheblich verlängert und somit den Erfordernissen der Praxis angepaßt werden. Die auf diese Weise erhaltenen Reaktionssysteme können auch bei gegebenenfalls erhöhter Temperatur (ca. 50 - 60°C) bis zu mehreren Tagen lang verarbeitet werden. Man erhält auch hier ein hochelastisches Polyurethanelastomer mit dem für das Beispiel I angebenen Eigenschaftsniveau.

Beispiel III

Analog Beispiel II werden 200 g des in Beispiel 2 b beschriebenen Aminopolyethers der Aminzahl 56 und 36,4 g feingemahlener 3,3'-Dimethyl-4,4'-diisocyanatodiphenylharnstoff (TDIH: Reaktionsprodukt aus 2,4-Diisocyanatotoluol (TDI) und 1 mol $H_2O$, NCO-Gehalt 24,3 %) der mittleren Korngröße 10 - 30 µ umgesetzt. Die mechanischen Eigenschaften des so erhaltenen hochelastischen Polyurethanelastomers sind in Tabelle 1 angegeben. Weiterhin zeigen die Ergebnisse der mit diesem Material durchgeführten thermomechanischen Analyse (TMA), daß ein deutlicher Abfall der mechanischen Werte erst oberhalb von 200°C erfolgt. Das vorliegende Elastomer besitzt demnach einen ausgezeichneten Wärmestand.

Beispiel IV

Analog Beispiel II werden 200 g des in Beispiel 1 b beschriebenen Aminopolyethers der Aminzahl 102 mit 66,5 g 3,3'-Dimethyl-4,4'-diisocyanatodiphenylharnstoff umgesetzt. Die mechanischen Eigenschaften des so erhaltenen hochelastischen Polyurethanelastomers sind in Tabelle 1 angegeben.

Beispiel V

Analog Beispiel II werden 200 g des in Beispiel 5 b genannten Aminopolyether der Aminzahl 98 mit 63,6 g 3,3'-Dimethyl-4,4'-diisocyanato-diphenylharnstoff umgesetzt. Die mechanischen Eigenschaften des so erhaltenen hochelastischen Polyurethanelastomers sind in Tabelle 1 angegeben.

**Tabelle 1**

| Beispiel Nr. | I | III | IV | V |
|---|---|---|---|---|
| Modul (100%)/MPa | 5,0 | 7,5 | 20,5 | 22,2 |
| Zugfestigkeit/MPa | 9,5 | 11,5 | 28,1 | 32,2 |
| Bruchdehnung / % | 250 | 300 | 400 | 500 |
| Weiterreißfestigkeit/KN/m | 20 | 30,2 | 80,5 | 84,0 |
| Elastizität / % | 45 | 48 | 52 | 59 |
| Härte/Shore A | 92 | 92 | 94 | 97 |
| Härte/Shore B | | | 61 | |

## Ansprüche

1. Endständige Aminophenoxygruppen aufweisende Verbindungen der allgemeinen Formel

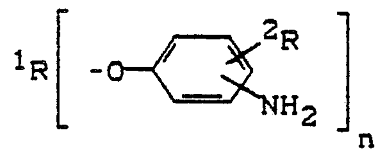

in welcher
$^1R$ für einen n-wertigen Rest steht, wie er durch Entfernung der Hydroxylgruppen von einer n-wertigen Polyhydroxylverbindung des Molgewichts 400 - 12.000 steht,
$^2R$ für Wasserstoff oder eine Methylgruppe steht und
n eine ganze Zahl von 2 bis 8 bedeutet.

2. Aromatische Polyamine nach Anspruch 1, dadurch gekennzeichnet, daß
$^1R$ für einen n-wertigen Rest steht, wie er durch Entfernung der Hydroxylgruppen von einer n-wertigen Polyhydroxylverbindung des Molgewichts 400 bis 6.000 entsteht und in der
n für eine ganze Zahl von 2 bis 4 steht.

3. Aromatische Polyamine nach Anspruch 1 und 2, dadurch gekennzeichnet, daß
$^1R$ für einen Polyalkylenpolyetherrest steht.

4. Aromatische Polyamine nach Anspruch 1 bis 3, dadurch gekennzeichnet, daß
$^2R$ für Wasserstoff steht
und der Ethersauerstoff und die Aminogruppe ortho-oder paraständig zueinander angeordnet sind.

5. Verfahren zur Herstellung von Polyaminen nach Anspruch 1 bis 4, dadurch gekennzeichnet, daß man
a) (i)-n-wertige höhermolekulare Polyhydroxylverbindungen der allgemeinen Formel
$^1R(OH)_n$
mit
(ii) Verbindungen der allgemeinen Formel

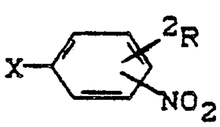

in Gegenwart von alkalisch reagierenden Verbindungen umsetzt und
b) die so erhaltenen Nitrophenoxyaddukte der allgemeinen Formel

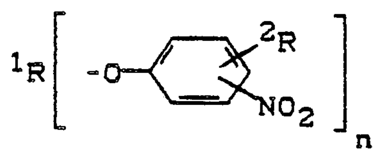

in an sich bekannter Weise zu den entsprechenden Diaminen hydriert, wobei in diesen Formeln $^1R$, $^2R$ und n die in den Ansprüchen 1 bis 4 angegebene Bedeutung haben und x für Fluor oder Chlor steht.

6. Verfahren nach Anspruch 5, dadurch gekennzeichnet, daß man die Stufe a) des Verfahrens in Gegenwart von gepulvertem Natrium-und/oder Kaliumhydroxid in einer zur Neutralisation des abgespaltenen Halogenwasserstoffs mindestens ausreichenden Menge und in Gegenwart eines stark polaren, aprotischen Lösungsmittels durchführt.

7. Verfahren nach Anspruch 5 und 6, dadurch gekennzeichnet, daß man die Stufe a) des Verfahrens in Gegenwart von DMSO durchführt.

8. Verfahren nach Anspruch 5 bis 7, dadurch gekennzeichnet, daß x für Chlor steht.

9. Verwendung der aromatischen Polyamine nach Anspruch 1 bis 4 als Aufbaukomponente bei der Herstellung von Polyurethankunststoffen nach dem Isocyanat-Polyadditionsverfahren.